Europäisches Patentamt

(19) European Patent Office

Office européen des brevets

(11) Veröffentlichungsnummer : **0 050 643**
**B1**

(12) EUROPÄISCHE PATENTSCHRIFT

(45) Veröffentlichungstag der Patentschrift :
30.01.85

(51) Int. Cl.⁴ : **B 64 F   1/31**

(21) Anmeldenummer : 81901214.7

(22) Anmeldetag : 27.04.81

(86) Internationale Anmeldenummer :
PCT/DE 81/00067

(87) Internationale Veröffentlichungsnummer :
WO/8103004 (29.10.81 Gazette 81/25)

(54) VERFAHREN ZUR ABFERTIGUNG VON FLUGGÄSTEN, HIERFÜR GEEIGNETE FLUGHAFENANLAGE UND HIERFÜR GEEIGNETES FAHRZEUG.

(30) Priorität : 25.04.80 DE 3016024
28.08.80 DE 3032342
05.02.81 DE 3103916

(43) Veröffentlichungstag der Anmeldung :
05.05.82 Patentblatt 82/18

(45) Bekanntmachung des Hinweises auf die Patenterteilung : 30.01.85 Patentblatt 85/05

(84) Benannte Vertragsstaaten :
AT CH FR GB LI LU NL SE

(56) Entgegenhaltungen :
CH-A-   298 362
CH-A-   374 292

(73) Patentinhaber : E.A.A. ECONOMI-
CAL-AIRPORT-ARCHITECTURCONSULTING GMBH
Hannoverche Strasse 50
D-3057 Neustadt 1 (DE)

(72) Erfinder : FUISZ, Georg
Scharnhorststrasse 16
D-3057 Neustadt 1 (DE)
Erfinder : SZABO, Lyubomir
Ostlandstrasse 42
D-5000 Köln 40 (DE)

(74) Vertreter : Patentanwälte Dipl.-Ing. Walter Kuborn
Dipl.-Phys. Dr. Peter Palgen
Mulvanystrasse 2
D-4000 Düsseldorf (DE)

**Beschreibung**

Die Erfindung bezieht sich auf ein Verfahren zur Abfertigung von Fluggästen nach Anspruch 1, einer hierfür geeigneten Flughafenanlage nach Anspruch 2 und ein hierfür geeignetes Fahrzeug nach Anspruch 3.

Die Abfertigung von Fluggästen vollzieht sich heute noch überwiegend so, daß die Fluggäste in einer Ankunftszone am Flughafengebäude eintreffen und mit ihrem Gepäck das Flughafengebäude durchwandern, bis sie am Abfertigungsschalter bzw. am Gepäckaufgabeschalter ankommen, die unter Umständen noch weit voneinander entfernt liegen. Je nach Ausbildung des Flughafens erhalten sie am Abfertigungsschalter eine Bordkarte, die am Eingang des Warteraums abgegeben wird. In modernen Flughäfen befindet sich der Abfertigungsschalter unmittelbar am Eingang des Warteraums. Nach Durchlaufen der Sicherheitsüberprüfungen halten sich die Fluggäste eine Zeitlang im Warteraum auf, um dann in Busse verladen und zu den auf dem Vorfeld wartenden Flugzeugen gefahren zu werden oder aber über teleskopartig ausfahrbare gedeckte Gänge unmittelbar aus dem Warteraum in ein nahe an das Warteraumgebäude herangerolltes Flugzeug hinüberzugehen. Das Gepäck wird inzwischen auf Gepäckfahrzeuge verlaten, zum Flugzeug gefahren und dort wieder ent- und in das Flugzeug umgeladen.

Alle diese Vorgänge erfordern eigene technische Einrichtungen und Räumlichkeiten, die dazu führen, daß moderne Flughafenanlagen einen enormen finanziellen Aufwand bedingen und daß außerdem das Einsteigen in ein Flugzeug für die Fluggäste eine z. B. im Vergleich mit dem Einsteigen in einen Zug langwierige und lästige Aktion darstellt.

Eine Weiterentwicklung ist aus dem den Oberbegriffen der Ansprüche 1 und 2 zugrundeliegenden DE-GM 79 21 784 bekannt, welches ein Transportfahrzeug zum Gegenstand hat, mittels welchem die Fluggäste und ihr Gepäck zusammen zum Flugzeug gebracht werden. Auch hierbei müssen indessen nach wie vor in der herkömmlichen Weise feste Baulichkeiten vorhanden sein, die die Fluggäste vor dem Besteigen des Fahrzeugs zu durchlaufen haben und in denen die Abfertigung und die Sicherheitsüberprüfungen stattfinden. Die hiermit verbundenen, vorstehend geschilderten Probleme sind also durch den Gegenstand des DE-GM 79 21 784 nicht gelöst.

Der Erfindung liegt die Aufgabe zugrunde, die Abfertigung zu vereinfachen und zu beschleunigen.

Diese Aufgabe wird durch das im Kennzeichen des Anspruchs 1 wiedergegebene Abfertigungsverfahren gelöst.

Dieses Verfahren bedeutet eine Abkehr von der gewohnten Abfertigung, bei welcher die Fluggäste verschiedene, z. B. weit auseinanderliegende Stationen in einem ortsfesten Flughafengebäude durchlaufen. Alle diese Stationen bzw. Einrichtungen sind in das Fahrzeug verlegt, so daß der Fluggast das Flughafengebäude bei einer normalen Abfertigung überhaupt nicht mehr betritt. Das Fahrzeug macht das Flughafengebäude nicht völlig überflüssig : Für längere Aufenthalte am Flughafen, die durch Wartezeiten beim Umsteigen und ähnliche Umstände zustandekommen, werden geeignete Einrichtungen nach wie vor vorhanden sein müssen. Das gleiche gilt für die außerhalb der Abfertigung in einem Flughafen noch vorhandenen technischen Einrichtungen. Die langen Wege im herkömmlichen Flughafengebäude jedoch entfallen, weil die erforderlichen Vorgänge komprimiert in dem Fahrzeug stattfinden, welches Schalter für die Abfertigung und die notwendige elektronische Einrichtung zur Prüfung und gegebenenfalls Änderung der Buchung sowie Kabinen und Geräte für die Sicherheitsüberprüfungen enthält.

Die Abfertigung und gegebenenfalls die Sicherheitsüberprüfungen können während der Wartezeit des Fahrzeuges, die zum Einsteigen der Fluggäste in der Ankunftszone zum Flugzeug und sogar noch während der Umsteigezeit vom Fahrzeug in das Flugzeug durchgeführt werden. Diese Zeiten addieren sich also nicht zu der Aufenthaltszeit der Fluggäste im Fahrzeug, wie es beim herkömmlichen Vorfeldtransport der Fall ist, sondern laufen parallel ab.

Ein wichtiger Punkt ist auch das Fehlen einer Verbindung zwischen der Ankunftszone und dem eigentlichen Flugfeld. Häufig ist es so, daß das herkömmliche Flughafengebäude über eigene Zubringer von einer nächsten Verkehrsstation verbunden werden muß. Auch wenn die Ankunft am Flughafen im eigenen Kraftfahrzeug erfolgt, können die Wege von den ausgedehnten Parkplätzen, für die in unmittelbarer Nähe des Flughafengebäudes bzw. Flugfeldes häufig kein Platz vorhanden ist, ziemlich lang sein.

Bei der Erfindung spielt dies alles keine Rolle. Die Ankunftszone kann in beliebiger Entfernung vom Flugfeld vorgesehen sein. Sie kann sich in der Nähe der Parkplätze befinden oder aber in einem ansonsten geeigneten, vom eigentlichen Flugfeld wieder weniger enffernten Bereich. Die Fluggäste können unmittelbar von dort, ohne ein eigentliches Flughafengebäude zu betreten, abgefertigt in das Flugzeug überführt werden. Auch ist es natürlich möglich, die Fluggäste von verschiedenen Ankunftszonen zu überführen, so daß nicht mehr die Gesamtheit der Fluggäste durch das zentrale Nadelöhr des herkömmlichen Flughafengebäudes geschleust werden muß.

Die Erfindung ist nicht an eine bestimmte Größe der Flughafenanlage gebunden, was das Fluggastaufkommen betrifft. Besondere Vorteile aber entwickelt die Erfindung bei neu zu errichtenden kleineren Flughafenanlagen, weil sie den Zwang zur Errichtung umfangreicher fester Gebäudeanlagen aufhebt.

Die bekannten Vorfeldbusse sind für die Zwecke der Erfindung nicht geeignet, weil sie ausschließlich dem reinen Transport der bereits abgefertigten Fluggäste aus den Warteräumen zu dem auf dem Vorfeld stehenden Flugzeug dienen. Die Abfertigung hat im festen Flughafengebäude stattgefunden. Diesbezügliche Einrichtungen finden sich in dem Vorfeldbus nicht.

Die Erfindung bezieht sich auch auf eine zur Durchführung des geschilderten Abfertigungsverfahrens geeignete Flughafenanlage (Anspruch 2) sowie ein entsprechendes Fahrzeug (Anspruch 3).

Die Kabine des Fahrzeugs weist eine Kapazität zur Aufnahme zumindest eines wesentlichen Teils der Fluggäste eines Flugzeuges auf. Gedacht ist beispielsweise an eine Kapazität von ca. 200 Fluggästen. Bei Großraumflugzeugen wird es unter Umständen notwendig sein, mit zwei Fahrzeugen hintereinander oder parallel zu arbeiten.

Die bevorzugte Ausführungsform des Fahrzeugs ist in Anspruch 4 wiedergegeben. Sie macht das Fahrzeug hinsichtlich der Überführung der Fluggäste vom Erdboden in der Ankunftszone bis in den meist in einiger Höhe gelegenen Einstieg des Flugzeuges autark, d. h. es sind keine besonderen Vorfeldleitern oder ähnliche Einrichtungen mehr erforderlich. Die Fluggäste besteigen das untere Geschoß selbst, wechseln innerhalb des Fahrzeuges von dem unteren auf das obere Geschoß über und verlassen dieses zum Einstieg hin im wesentlichen auf gleicher Höhe. Sie setzen ihr Gepäck im Fahrzeug ab, worauf es unmittelbar von dort in das Flugzeug umgeladen wird.

Zweckmäßig enthält gemäß Anspruch 5 die in der Kabine vorgesehene Einrichtung zum Check-in in der üblichen Weise ein Datensichtgerät zur Kontrolle der Buchung und gegebenenfalls auch eine Einrichtung für die Einspeicherung weiterer Buchungsvorgänge.

Diese Geräte können gemäß Anspruch 6 über Funk mit der zentralen Datenverarbeitungsanlage der Flughafenanlage verbunden sein, wobei die Funkübermittelung nur die begrenzte Reichweite des maximalen Abstandes des Fahrzeuges von dem Flughafengebäude aufzuweisen braucht.

Durch die Anordnung nach Anspruch 7 wandern die Fluggäste nach ihrem Einstieg in das Fahrzeug an den Checkin-Schaltern vorbei und wechseln anschließend in das obere Geschoß des Fahrzeugs über, so daß sich dort nur noch abgefertigte Fluggäste aufhalten, die nicht mehr kontrolliert zu werden brauchen und sogleich in das Flugzeug einsteigen können, ohne daß dazu unfallträchtige Zwischenstationen wie Treppen o. dgl. zu überwinden sind.

Unter dem gleichen Aspekt steht die Maßnahme nach Anspruch 8 ; kein Fluggast kann also in das obere Geschoß und das Flugzeug gelangen, ohne das Abteil für die Sicherheitsprüfung durchlaufen zu haben. Auch ein Verlassen des oberen Geschosses ist nur über dieses Abteil möglich und kann so mit großer Sicherheit verhindert werden.

Eine Kabine, die die erforderlichen Einrichtungen enthält und größenordnungsmäßig eine Anzahl von etwa 200 Passagieren aufnehmen soll, hat natürlich eine gewisse Größe. Es ist mit einem Gewicht in der Größenordnung von etwa 40 Tonnen zu rechnen.

Um eine solche Kabine wirtschaftlich zu einem Fahrzeug zu gestalten, dient die in Anspruch 9 angegebene Ausgestaltung der Erfindung.

Containertransporter sind portalartige Fahrzeuge mit zwei seitlichen Längsholmen, an deren Unterseite vorne und hinten die tragenden Räder gelagert sind, wobei mindestens ein Radpaar um eine vertikale Achse lenkbar ist. Die Geräte können selbstfahrend sein, wobei die Antriebsanordnung auf den Längsholmen oder in einem oberhalb des freien Portalraums befindlichen Querbereich angeordnet ist. Die Containertransporter können einen auf dem Boden oder einem flachen Straßen- oder schienenfahrzeug befindlichen Container oder mehrere übereinandergestapelte solche Container überfahren und mittels einer Hubvorrichtung anheben. Der in dem freien Portalraum hängende Container wird dann an die gewünschte Stelle verfahren. Angesichts des möglichen Gewichts eines oder mehrerer Container der üblichen Abmessungen sind die Containertransporter zum Tragen erheblicher Lasten gerade in der hier in Betracht kommenden Grössenordnung befähigt. Die Maßnahme des Anspruchs 9 erlaubt es also, sich der fertigen Technologie dieser Fahrzeuge zu bedienen, so daß die verbleibende konstruktive Leistung nur noch darin besteht, die Kabine in geeigneter Weise in das Fahrgestell zu integrieren.

Diesem Ziel dient die Maßnahme nach Anspruch 10, die es gestattet, das untere Geschoß an den Quergliedern aufzuhängen, während das obere Geschoß auf diesen aufsteht. Die Querglieder stören also nicht, weil sie im Bereich der Trennung zwischen Ober- und Untergeschoß, nicht aber quer durch eines derselben verlaufen.

Wenn von einem fertigen Containertransporter ohne Änderungen der Konstruktion Gebrauch gemacht werden soll, kann die zwischen den Längsholmen bzw. den Rädern verbleibende Breite für die Zwecke der Erfindung zu gering sein. In diesem Fall empfiehlt sich die Ausgestaltung nach Anspruch 11.

Das Fahrzeug kann ebenso wie die weitaus meisten Containertransporter selbstfahrend sein (Anspruch 12). Es fällt aber auch unter die Erfindung ein von einem Hilfsfahrzeug schleppbares Fahrzeug (Anspruch 13).

Eine weitere Ausführungsform des Fahrzeugs ist Gegenstand des Anspruchs 14.

Fahrzeuge mit einem im wesentlichen horizontalen Rahmen, unter welchem mehrere, um 360 Grad in gegenseitige Abhängigkeit gesteuert drehbare, einzeln angetriebene Radsätze angeordnet sind, sind aus dem Bereich der Schwerlasttransportfahrzeuge bekannt. Der Rahmen wird hierbei durch eine ebene Plattform gebildet, auf die die Last aufbringbar ist. Auch die Fahrerkabine ist unter der Plattform angebracht, so daß keinerlei Teile über die Plattform nach oben vorstehen. Wenn die Radsätze parallel zueinander in Längsoder Querrichtung ausgerichtet sind, vollführt das Fahrzeug eine Bewegung in diesen Richtungen. Es können aber auch beliebige Kurvenradien durchfahren werden, wobei die Lenkwinkel der einzelnen Radsätze des Fahrzeugs je nach ihrem Abstand vom jeweiligen Kurvenmittelpunkt selbsttätig von der Steuerung eingestellt werden. Ein solches Fahrzeug besitzt also eine außerordentliche Manövrierfähigkeit und behindert durch sein im wesentlichen flache Oberseite auch die Ausgestaltung einer darauf abgestützten Kabine nicht.

Um Bauhöhe einzusparen, ist die Ausgestaltung nach Anspruch 15 zweckmäßig. Der Rahmen hat natürlich notwendig eine gewisse Höhe, die bei der angegebenen Ausgestaltung durch die Unterbringung eines Teils der Kabine zwischen den Rahmenholmen genutzt werden kann.

Das Fahrzeug muß indessen nicht mehrgeschossig sein. In manchen Fällen wird sich eine solche Ausführung sogar verbieten, beispielsweise wenn das Fahrzeug unter bestehenden Baulichkeiten hindurch oder durch Tunnels fahren muß, die eine begrenzte lichte Höhe aufweisen. In solchen Fällen kommt die Ausführung nach Anspruch 16 in Betracht, bei der zusätzlicher Raum dadurch gewonnen wird, daß auch außerhalb der Spurbreite Teile der Fahrgastkabine vorhanden sind. Diese Ausführungsform ist nicht an bestimmte Ausbildungen des Fahrgestells gebunden.

Um Treppen oder Aufzüge einzusparen, die stets ein Hemmnis darstellen und für die Fluggäste lästig und unfallträchtig sind, empfiehlt sich die Maßnahme nach Anspruch 17.

Die Ausbildung der Sitzanordnung nach Anspruch 18 gibt nicht nur den Fluggästen einen besseren Überblick über die Vorgänge in der Kabine und trägt zu ihrer Beruhigung bei, sondern gestattet umgekehrt auch das leichte Erfassen der Fluggäste durch das Personal, beispielsweise zum Abzählen der Passagiere im Rahmen der Startvorbereitungen.

In einem weiteren Aspekt liegt der Erfindung die Aufgabe zugrunde, die bei gleislosen Fahrzeugen durch die Reifen gegebenen Probleme zu verringern und gleichzeitig die Lenkung zu vereinfachen.

Diese Aufgabe wird durch eine Flughafenanlage nach Anspruch 19 gelöst. Durch die Verwendung schienengebundener Fahrzeuge entfällt jeglicher Aufwand für die Lenkung, der bei der Größe der Fahrzeuge erheblich sein kann. Die Gleisanlage wird von der Ankunftszone bis zum Vorfeld längs eines geeigneten Weges verlegt, der die notwendigen Stationen zur Aufnahme von Fluggästen aufweist. Die Flugzeuge nehmen feste Positionen ein, an denen die Gleisanlage unmittelbar vorbeiführt. Die Erfahrung mit den herkömmlichen Terminals, an denen die Flugzeuge unmittelbar andocken, zeigt, daß die Einnahme fester Positionen für die Flugzeuge unproblematisch ist.

Dieser Gedanke verkörpert sich nicht nur in der Flughafenanlage, sondern auch in dem entsprechenden Fahrzeug, welches gemäß Anspruch 20 auch mit Radsätzen ausgerüstet sein kann, die wahlweise sowohl das Befahren der Gleisanlage als auch das Verfahren einer gleislosen Fahrfläche, also z. B. eines straßenähnlichen Weges oder des Vorfeldes, gestattet.

Bei Flughäfen, bei denen die Flugzeuge unmittelbar an das Warteraumgebäude heranrollen, sind außerdem Bugsierfahrzeuge notwendig, die das Flugzeug, welches ja nicht rückwärtsfahren kann, von der Position unmittelbar am Warteraumgebäude in eine Abrollposition in einiger Entfernung von diesem schieben, von der aus das Flugzeug mit eigenem Antrieb abrollen und zur Startbahn weiterrollen kann.

Der Erfindung liegt weiterhin die Aufgabe zugrunde, auch die Bugsierfahrzeuge durch einen geringeren Aufwand erfordernde Vorkehrungen abzulösen.

Diese Aufgabe wird erfindungsgemäß dadurch gelöst, daß das Flugzeug auf dem Vorfeld von dem Fahrzeug bugsiert wird (Anspruch 21).

Das nach der Erfindung vorgesehene Fahrzeug übernimmt also nicht nur weitgehend die Aufgaben des konventionellen Flughafengebäudes, sondern auch einen Teil der Aufgaben der Vorfeldeinrichtungen.

Zwar wird im allgemeinen ein Bugsieren von Flugzeugen von Warteräumen hinweg nicht in Betracht kommen, weil diese Warteräume durch das erfindungsgemäße System ja gerade eingespart werden. Es gibt jedoch auf einem an das neue System angepaßten, insbesondere kleineren Flughafen genügend Situationen, in denen das Bugsieren eines Flugzeugs zweckmäßig ist bzw. Vorteile bringt, verglichen mit dem Fall, daß das Flugzeug mit eigenem Antrieb fährt, was immer gewisse Wenderadien und einen Freiraum hinter dem Flugzeug wegen des Düsenstrahls zur Voraussetzung hat.

Vorrichtungsmäßig besteht die Ausgestaltung darin, daß das Fahrzeug eine Kuppelvorrichtung aufweist, mittels derer es an das Flugzeug ankuppelbar ist, um dieses zu bussieren (Anspruch 22).

Solche Kuppelvorrichtungen sind von den herkömmlichen Bugsierfahrzeugen her bekannt. Sie umfassen meist eine daran angebrachte Kuppelstange, die am vorderen Rad des Flugzeugs angreift.

Da das Fahrzeug nach der Erfindung höher ist als die üblichen Bugsierfahrzeuge und nicht unter den Bug eines Flugzeuges fahren kann, wird die Kuppelstange im allgemeinen länger sein müssen als üblich.

Es empfiehlt sich daher, daß die Kuppelstange gemäß Anspruch 23 unter das Fahrzeug einfahrbar ist, damit sie den Betrieb des Fahrzeugs ansonsten nicht behindert.

Die Ausgestaltung nach Anspruch 24 als Luftkissenfahrzeug kann bei entsprechenden geografischen Verhältnissen zweckmäßig sein.

In der Zeichnung sind Ausführungsbeispiele des erfindungsgemäßen Fahrzeugs schematisch dargestellt.

Figur 1  ist eine perspektivische Ansicht des Fahrzeugs schräg von vorn ;

Figur 2  ist eine in den Proportionen etwas veränderte Seitenansicht des Fahrzeugs ;

Figur 3  ist eine Ansicht gemäß Fig. 2 von rechts ;

Figur 4  ist eine Ansicht gemäß Fig. 2 von links ;

Figur 5  ist ein Querschnitt nach der Linie V-V in Fig. 8 ;

Figur 6  ist ein Querschnitt nach der Linie VI-VI in Fig. 8 ;

Figur 7  ist ein Grundriß des Obergeschosses ;

Figur 8  ist ein Grundriß des Untergeschosses ;

Figur 9  zeigt einen vertikalen Querschnitt durch ein Fahrzeug, welches auf einem Rahmen mit einzelnen lenkbaren Radsätzen aufgebaut ist ;

Figuren 10a, 10b und 10c veranschaulichen schematisch die Manövrierfähigkeit eines solchen Fahrzeugs ;

Figur 11  zeigt einen Grundriß eines eingeschossigen Fahrzeugs ;

Figur 12  zeigt eine Ansicht gemäß Fig. 6 von unten ;

Figur 13  zeigt einen vertikalen Querschnitt durch eine Ausführungsform des Fahrzeugs mit in der Höhe gestaffelten Sitzreihen ;

Figur 14  zeigt einen Grundriß des oberen Stockwerks des Fahrzeugs nach Fig. 5 ;

Figur 15  zeigt einen vertikalen Längsschnitt durch das Fahrzeug ;

Figur 16  zeigt eine Ansicht eines Fahrzeugs mit Kuppelvorrichtung.

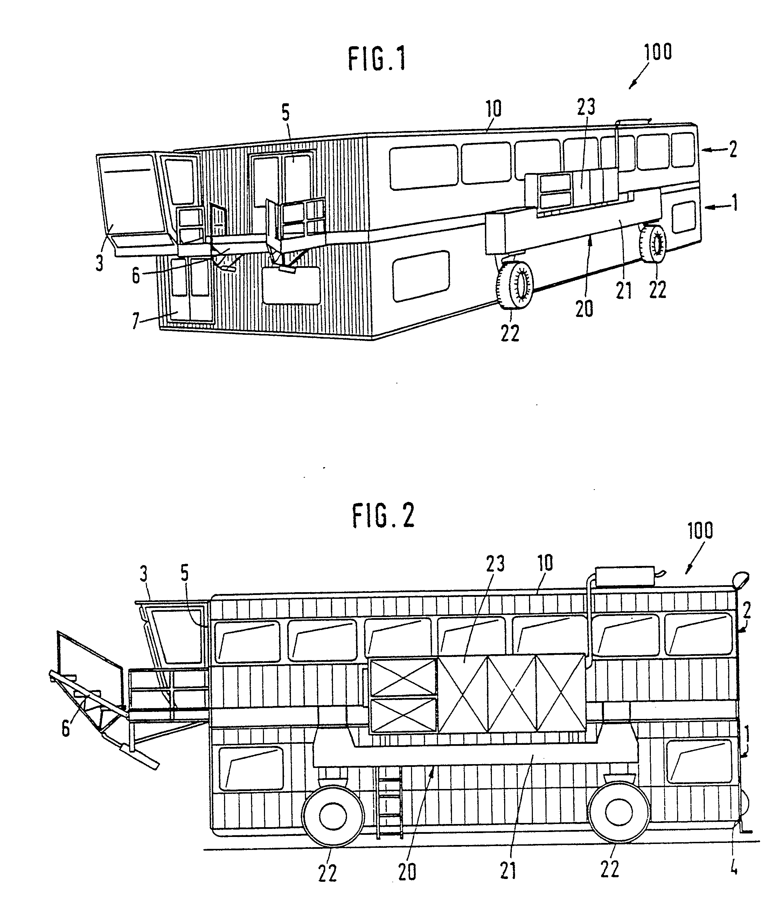

Das in Fig. 1 als Ganzes mit 100 bezeichnete Fahrzeug umfaßt eine Kabine 10, welche aus einem Untergeschoß 1 und einem Obergeschoß 2 besteht. Getragen wird die Kabine von einem als Ganzes mit 20 bezeichneten Containertransporterfahrgestell, von welchem in den Fig. 1 und 2 jeweils ein Längsholm 21 mit den darunter angebrachten luftbereiften Rädern 22 zu erkennen ist, von denen eines lenkbar ist. Das Containertransporterfahrgestell 20 besitzt einen Antriebsmotor 23, der auf dem Längsholm 21 angeordnet ist. Die Bedienung des Fahrzeugs 100 erfolgt von der Fahrerkabine 3 aus, die an der Vorderseite des Fahrzeugs angebracht ist. Der Eingang 4 befindet sich im Untergeschoß 1 an der Rückseite des Fahrzeugs 100, während der Ausstieg 5 sich im Obergeschoß neben der Fahrerkabine befindet. Am Ausgang 5 ist eine Stiege 6 vorgesehen, die in ihrer Höhe an die verschiedenen Höhenlagen der Einstiege der Flugzeuge anpaßbar ist und das Hinübergehen der Fluggäste aus dem Obergeschoß 2 unmittelbar in den Einstieg des Flugzeuges ermöglicht.

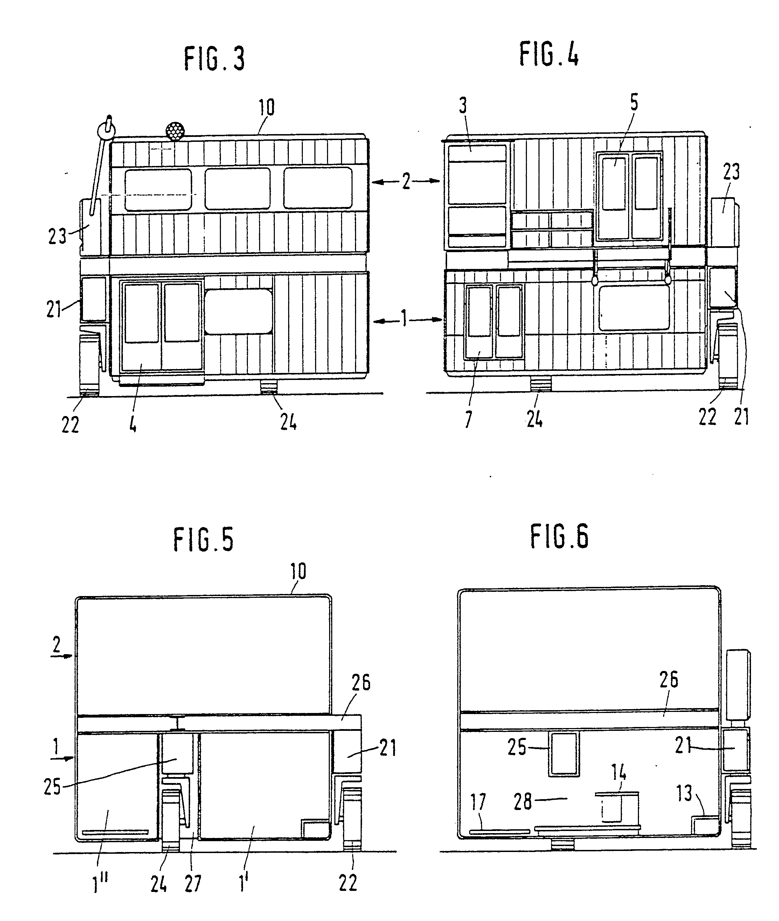

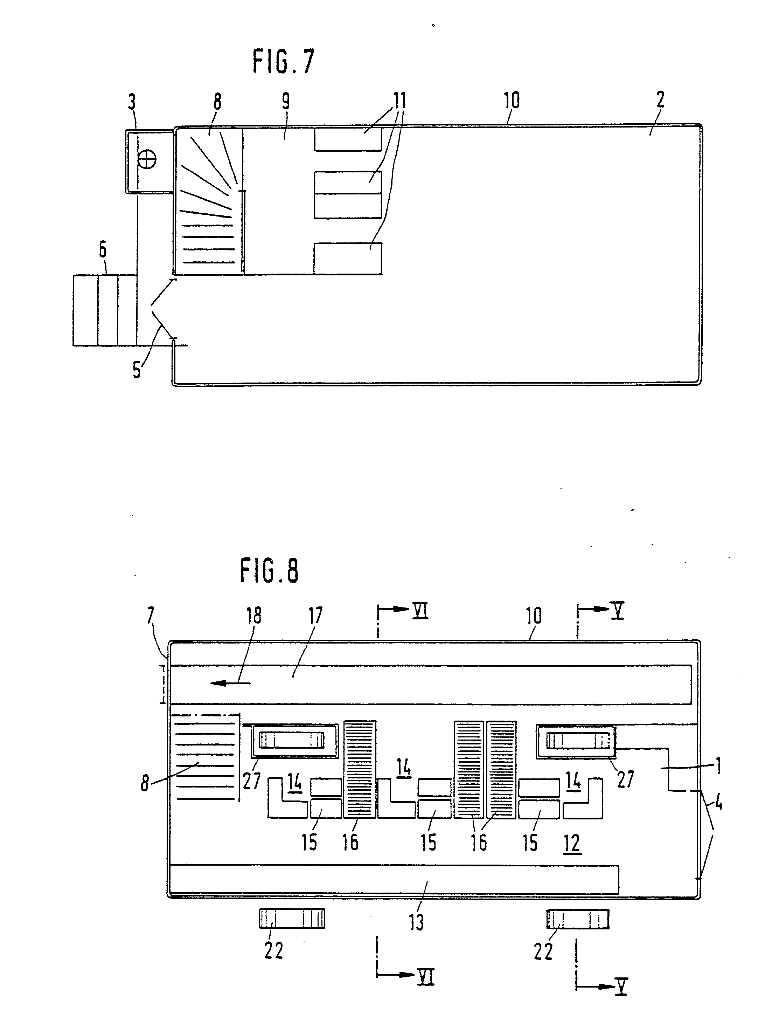

In Fig. 3 ist erkennbar, daß die Kabine breiter ist als das Containertransporterfahrgestell 20. Dessen rechte Räder (in Fahrtrichtung gesehen) 24 befinden sich nämlich nicht an der rechten Seite der Kabein 20, sondern innerhalb derselben, wie es in Fig. 3 dargestellt ist. Durch den einseitigen Überhang wird ein relativ großer zusätzlicher unverstellter Raum in der Kabine 10 im Untergeschoß 1 gewonnen, wie auch an den Fig. 5 und 8 erkennbar ist.

Die in Fig. 4 dargestellte Tür 8 an der Vorderseite des Fahrzeuges ist für den normalen Fluggastverkehr geschlossen und dient nur dem Entladen des Gepäcks von der Ablage 17 (Fig. 8).

Aus Fig. 5 ist entnehmbar, daß die beiden Längsholme 21, 25 des Containertransporterfahrgestells durch Querglieder 26 überbrückt sind, auf die das Obergeschoß 2 aufgesetzt und an die das Untergeschoß 1 angehängt ist. Das Untergeschoß 1 umfaßt einen Teil 1' zwischen den Längsholmen 21, 25 und einen seitlich außerhalb derselben angeordneten Teil 1". Die im Innern der Kabine 10 angeordneten Räder 24 sind in besonderen Radkästen 27 untergebracht (siehe auch Fig. 8). Der zwischen den Rädern 24 unter den Längsholmen 25 freibleibende Raum 28 kann genutzt werden, wie es aus Fig. 6 ersichtlich ist.

In Fig. 7 ist ein Grundriß des Obergeschosses 2 wiedergegeben, welches die Fluggäste über eine Treppe 8 erreichen. Sie gelangen dann in einen Bereich 9 für die Sicherheitsüberprüfung. Hier werden die Fluggäste und gegebenenfalls das Handgepäck auf mitgebrachte Waffen untersucht und gegebenenfalls die Pässe überprüft. Dies geschieht an den Durchgängen 11. Die Fluggäste können sich anschließend in dem Obergeschoß aufhalten, wo natürlich nicht dargestellte Sitzgelegenheiten vorgesehen sind. Bei Erreichen des Flugzeuges können die Fluggäste aus dem Ausgang 5 über die Stiege 6 sogleich in das Flugzeug überwechseln.

Die Fluggäste besteigen die Kabine 10 am Eingang 4 und gelangen in einen in Längsrichtung sich erstreckenden Gang 12, auf dessen linker Seite eine Bank 13 zum Sitzen oder Absetzen des Gepäcks vorgesehen sein kann. Längs der Mitte des Untergeschosses 1 erstrecken sich die Check-in-Schalter 14, die die üblichen Datensichtgeräte 15 bzw. ein vollständiges Buchungsdatenterminal umfassen, die über Funk in nicht dargestellter Weise mit der zentralen Datenverarbeitungsanlage der Flughafenanlage verbunden sind. Zwischen den Check-in-Schaltern 14 sind in Querrichtung verlaufende Gepäckbänder 16 vorgesehen, die das Gepäck von der Seite des Ganges 12 auf die bezüglich der Check-in-Schalter μ4 gegenüberliegende Seite fördern, wo es auf eine Ablage 17 übergeht, die zweckmäßig ebenfalls als Förderanlage ausgebildet ist, die das Gepäck im Sinne des Pfeiles 18 aus der Tür 7 hinausfördern in der Lage ist. Die Ablage 17 kann auch als Staurollenbahn oder in ähnlicher Weise ausgebildet sein, so daß das Gepäck automatisch dicht zusammengestaut werden kann. Das zur Tür 7 hinausgeförderte Gepäck wird außen von einer weiteren Fördereinrichtung übernommen, die es direkt in den Gepäckraum des Flugzeuges weiterfördert.

Die Fluggäste betreten, wie gesagt, das Untergeschoß der Kabine 10 am Eingang 4, werden an den Check-in-Schaltern 14 abgefertigt, wobei gegebenenfalls das Gepäck auf die Ablage 17 übergeht, wechseln über die Treppe 8 in das Obergeschoß 2 über, durchlaufen den Sicherheitsprüfungsbereich 9 und versammeln sich dann in dem Obergeschoß 2. Nach dem Verlassen der Durchgänge 11 sind die Fluggäste vollständig abgefertigt und können ohne weitere Kontrolle in das Flugzeug überwechseln. Sie können das Obergeschoß 2 auch nicht mehr verlassen, weil sie in dem Abteil 9 gemerkt werden. Die gesamte Abfertigung und Überprüfung der Fluggäste kann während der Einsteigezeit in das Fahrzeug 100 während dessen Fahrt zum Flugzeug und auch noch während der Aussteigezeit eines Teils der Passagiere am Flugzeug selbst stattfinden.

Beim Aussteigen verläuft der Weg der Fluggäste natürlich in umgekehrter Richtung.

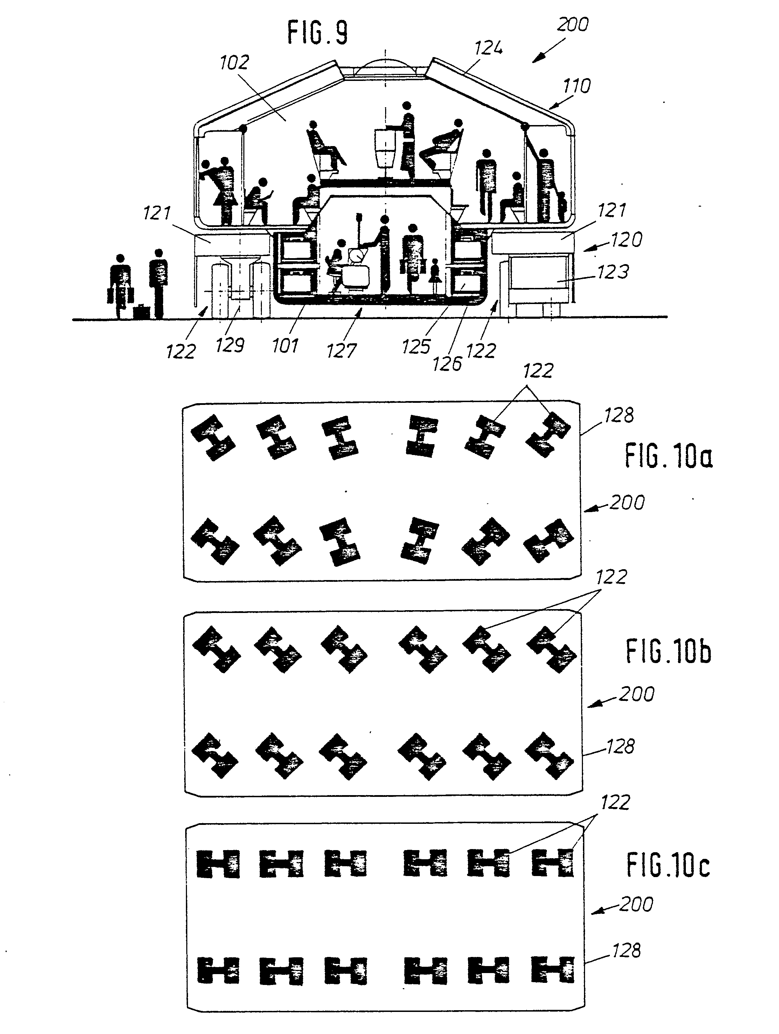

Das in Fig. 9 als Ganzes mit 200 bezeichnete Fahrzeug umfaßt eine Kabine 110, welche aus einem Untergeschoß 101 und einem Obergeschoß 102 besteht Getragen wird die Kabine 110 von einem als Ganzes mit 120 bezeichneten Fahrgestell, welches zwei einander parallel in einer horizontalen Ebene in Längsrichtung gegenüberliegende Rahmenholme 121 umfaßt, unter denen einzeln lenkbare und angetriebene Radsätze 122 angebracht sind. Die Lenkausschläge der einzelnen Radsätze 122 erfolgen über eine zentrale Steuerung, die die Lenkausschläge koodiniert und bei Kurvenfahrt in Abhängigkeit vom Abstand des einzelnen Radsatzes 122 vom jeweiligenkurvenmittelpunkt koodiniert. Die Lenkung erfolgt durch die Rahmenholme 121 gegebenen Plattform angebracht ist.

Das Obergeschoß 102 ruht auf der Oberseite der Rahmenholme 121 auf, während das Untergeschoß zwischen den Rahmenholmen 121 aufgehängt ist. Es ragt um einen gewissen Betrag in das Obergeschoß 102 hinein. Der dadurch im Obergeschoß 102 verlorengehende Raum wird durch eine entsprechende Schrägausbildung des Daches 124 wiedergewonnen.

Die Passagiere betreten das Fahrzeug 200 im Untergeschoß, geben ihr Gepäck 125 auf die entsprechenden, sich in Längsrichtung des Fahrzeuges erstreckenden Förderbänder 126 und werden an den Schaltern 127 abgefertigt. Sie gehen dann über eine nicht dargestellte Treppe in das Obergeschoß 102 hinauf, wobei die Sicherheitskontrollen durchgeführt werden. Während der Fahrt bis zum Besteigen des Flugzeugs, was durch eine unmittelbar in die Eingangstür des Flugzeugs führende Brücke geschieht, halten sich die Passagiere im Obergeschoß 102 auf.

In den Fig. 10a, 10b und 10c ist die Verteilung der Radsätze 122 über das Fahrgestell 120 wiedergegeben. Das Fahrzeug 200 ist durch seinen Umriß 128 angedeutet.

Die Radsätze sind symmetrisch über die Unterseite des Rahmens 120 verteilt. In dem Ausführungsbeispiel der Fig. 10a, 10b und 10c besitzt jeder Radsatz 122 zu beiden Seiten der vertikalen Drehachse 129 (Fig. 10) Zwillingsreifen, während in Fig. 9 nur einfache Reifen vorgesehen sind. Es sind insgesamt an jedem Rahmenholm 121 sechs hintereinanderliegende Radsätze 122 angebracht, wobei die Radsätze der beiden Rahmenholme 121 einander in Querrichtung gegenüberliegen. Die Zahl der Radsätze ist nicht zwingend, sondern richtet sich nach der Größe des Fahrzeugs 200 und der Tragkraft der verwendeten Räder.

In Fig. 10a sind die einzelnen Radsätze 122 so eingestellt, daß das Fahrzeug 200 eine Kurve durchfährt, deren Mittelpunkt unterhalb der Fig. 10a gelegen ist. Alle Radachsen gehen durch den Kurvenmittelpunkt. Dieser kann beliebig gelegt werden, so daß das Fahrzeug 200 sehr enge Kurvenradien durchfahren und sogar auf der Stelle drehen kann.

In dem Beispiel nach Fig. 10b führt das Fahrzeug als Ganzes eine Schrägfahrt aus, in dem Ausführungsbeispiel nach Fig. 10c eine Querfahrt. Alle diese Möglichkeiten werden von der zentralen Steuerung durch Betätigung des Lenkrades in der Kabine 123 eingestellt. Die Lage der Abstützpunkte des Fahrgestells 120 ändert sich dadurch nicht, so daß die Stabilität des Fahrzeugs 200 durch den Lenkzustand nicht beeinflußt wird.

Der Antrieb der einzelnen Radsätze 122 erfolgt elektrisch oder hydraulisch.

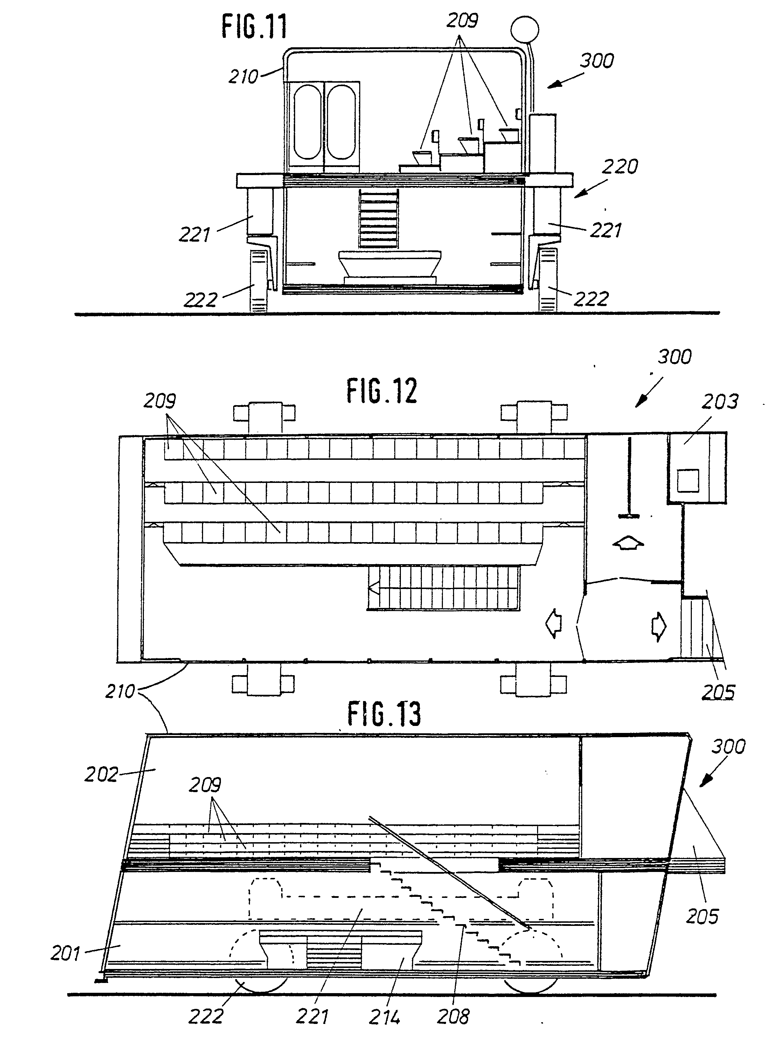

Bei dem Fahrzeug 300 der Fig. 11 bis 13 wird die Kabine von einem als Ganzes mit 220 bezeichneten Containertransporterfahrgestell getragen, von welchem in den Fig. 11 und 13 die Längsholme 221 mit den darunter angebrachten luftbereiften Rädern 222 erkennbar sind. Die Bedienung des Fahrzeugs 300 erfolgt von der Fahrerkabine 203 aus, die an der Vorderseite des Fahrzeugs 300 angebracht ist. Der Eingang befindet sich im Untergeschoß 1, während der Ausstieg 205 im Obergeschoß 203 vorgesehen ist. Der Ausstieg 205 ist durch geeignete Maßnahmen an die verschiedenen Höhenlagen der Einstiege der Flugzeuge anpaßbar, beispielsweise durch eine in der Höhe verstellbare Rampe oder Brücke, um das Hinübergehen der Fluggäste aus dem Obergeschoß 202 unmittelbar in den Einstieg des Flugzeuges zu ermöglichen.

Die Fluggäste werden an den Schaltern 214 abgefertigt und gelangen, ggf. nach Vornahme der Sicherheitsüberprüfungen, über die Treppe 208 in das Obergeschoß 202, wo sie auf Sitzreihen 209 Platz nehmen können, die sich längs einer Seitenwand des Fahrzeuges erstrecken und in der Höhe gestaffelt sind, so daß die äußeren Sitzreihen am höchsten angeordnet sind.

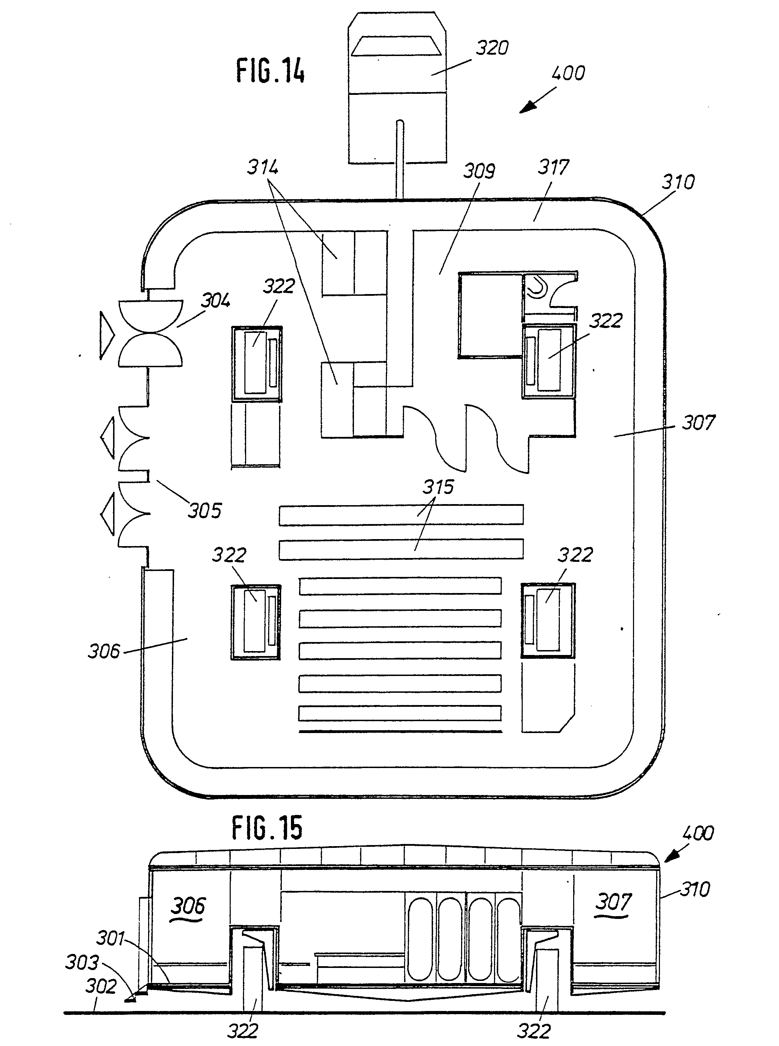

Das Fahrzeug 400 der Fig. 14 und 15 besitzt eine Kabine 310, die nur eingeschossig ist. Der Boden 301 der Kabine 310 liegt dicht über dem Erdboden 302, so daß der Einstieg mittels nur zweier Stufen 303 möglich ist. Teile 306, 307 der Kabine 310 sind außerhalb der durch die Räder 322 gegebenen Spurbreite angeordnet, so daß das Fahrzeug sehr breit ist. Der Einstieg 304 und der Ausstieg 305 liegen nebeneinander in gleicher Höhe. Für das Besteigen des Flugzeugs ist also eine separate Einstiegstreppe erforderlich. Selbstverständlich kann aber statt des Ausstiegs 305 auch eine mit dem Fahrzeug 400 fest verbundene Brücke oder Rampe für den unmittelbaren Einstieg in das Flugzeug vorgesehen sein.

Die Abfertigung erfolgt an den Schaltern 314, die Sicherheitsüberprüfung im Bereich 309. Der Aufenthalt der Fluggäste geschieht auf den Sitzreihen 315. Die Gepäckablage 317 befindet sich an den Seitenwänden.

Das Fahrzeug 400 ist nicht selbstfahrend, sondern wird von einem Zugfahrzeug 320 geschleppt.

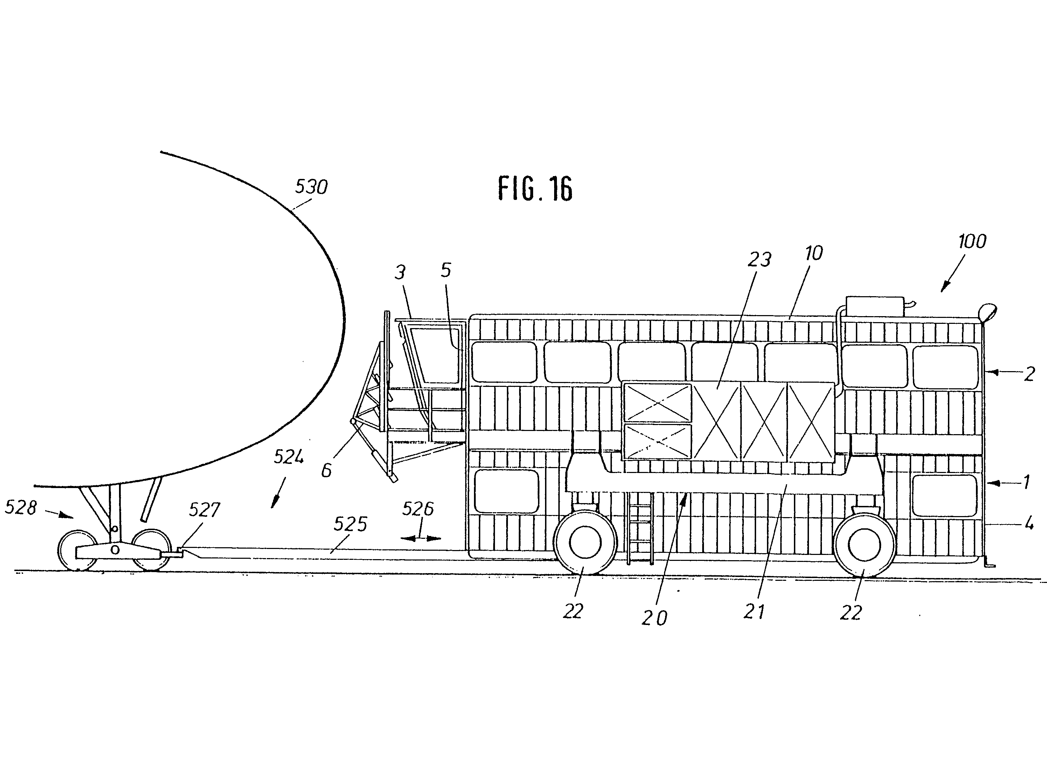

Das Fahrzeug 100 der Fig. 16 entspricht im wesentlichen der Ausführungsform nach den Fig. 1 bis 8 und trägt insoweit die gleichen Bezugszahlen. Die Stiege 6 ist in Fig. 16 hochgeklappt, weil in dem dargestellten Betriebszustand das Einsteigen der Fluggäste bereits abgeschlossen ist.

Unter dem Boden des Untergeschosses 4 ist eine als Ganzes mit 524 bezeichnete Kuppelvorrichtung angebracht, die eine Kuppelstange 525 umfaßt, die im Sinne des Pfeiles 526 nach vorn unter dem Fahrzeug 100 hervor ausfahrbar bzw. unter das Fahrzeug einfahrbar ist. Am vorderen Ende besitzt die Kuppelstange 525 einen Kuppelzapfen 527, der an einer entsprechenden Einrichtung am Bugradsatz 528 des Flugzeuges 530 angreift. Auf diese Weise kann mit Hilfe des Antriebs des Fahrzeugs 100 das Flugzeug 530 geschoben oder gezogen werden.

**Ansprüche**

1. Verfahren zur Abfertigung von Fluggästen zwischen der Ankunft in einer Ankunftszone und dem Besteigen des Flugzeuges, mit Gepäckaufgabe und Transport von der Ankunftszone zu dem auf dem Vorfeld stehenden Flugzeug, bei welchem die Fluggäste nach der Ankunft in der Ankunftszone mit dem Gepäck in ein Fahrzeug (100) geleitet werden, welches die Fluggäste zusammen mit dem Gepäck unmittelbar zum Flugzeug transportiert, dadurch gekennzeichnet, daß die Abfertigung und gegebenenfalls die Sicherheitsüberprüfung der Fluggäste in dem Fahrzeug (100) stattfindet.

2. Flughafenanlage zur Durchführung des Verfahrens nach Anspruch 1 mit einer Ankunftszone für die Fluggäste, mit Einrichtungen zur Abfertigung sowie gegebenenfalls zur Sicherheitsüberprüfung der Fluggäste sowie mit mindestens einem Fahrzeug (100), mittels welchem die Fluggäste mitsamt dem Gepäck von der Ankunftszone unmittelbar zum Flugzeug überführbar sind, dadurch gekennzeichnet, daß die Einrichtungen zur Abfertigung sowie gegebenenfalls zur Sicherheitsüberprüfung in dem Fahrzeug (100) angeordnet sind.

3. Fahrzeug für eine Flughafenanlage nach Anspruch 2, dadurch gekennzeichnet, daß die Kabine (10) des Fahrzeugs eine Kapazität zur Aufnahme zumindest eines wesentlichen Teils der Fluggäste eines Flugzeugs aufweist.

4. Fahrzeug nach Anspruch 3, bei welchem die Kabine (10) zweigeschossig ist und das Untergeschoß (1) einen vom Erdboden aus besteigbaren Eingang (4) aufweist, während der Ausgang (5) im oberen Geschoß (2) gegebenenfalls über eine verstellbare Stiege (6) unmittelbar mit dem Einstieg des Flugzeugs in Verbindung bringbar ist, dadurch gekennzeichnet, daß die Abfertigungsschalter (14) sich längs der Mitte des unteren Geschosses (1) erstrecken und die Gepäckablage (17) als auf der der Zutrittsseite (12) der Abfertigungsschalter (14) gegenüberliegenden äußeren Längsseite des Fahrzeugs (100) angeordnete Längsfördereinrichtung ausgebildet ist.

5. Fahrzeug nach Anspruch 3 oder 4, dadurch gekennzeichnet, daß die Einrichtung zur Abfertigung ein Datensichtgerät (15) zur Kontrolle der Buchung und gegebenenfalls auch eine Einrichtung für die Einspeicherung weiterer Buchungsvorgänge enthält.

6. Fahrzeug nach Anspruch 5, dadurch gekennzeichnet, daß das Datensichtgerät (15) und gegebenenfalls die Einrichtung zur Einspeicherung weiterer Buchungsvorgänge über Funk mit der zentralen Datenverarbeitungsanlage der Flughafenanlage verbunden sind.

7. Fahrzeug nach einem der Ansprüche 3 bis 6, dadurch gekennzeichnet, daß die Einrichtung (14, 15) zur Abfertigung im unteren Geschoß (1) und dem Eingang (4) gegenüber eine Treppe (8) oder ein Aufzug für den Übergang der Fluggäste vom unteren Teil (1) in das obere (2) Geschoß vorgesehen sind.

8. Fahrzeug nach Anspruch 7, dadurch gekennzeichnet, daß im Bereich des Übergangs das Abteil (9) für die Sicherheitsprüfung der Fluggäste und des Handgepäcks angeordnet ist und der einzige Durchgang in das obere Geschoß (2) durch das Abteil (9) führt.

9. Fahrzeug nach einem der Ansprüche 3 bis 8, dadurch gekennzeichnet, daß es eine von einem Containertransportfahrgestell (20) getragene Kabine (10) umfaßt.

10. Fahrzeug nach Anspruch 9, darduch gekennzeichnet, daß die tragenden Längsholme (21, 25) des Containertransportfahrgestells (20) durch in Höhe der Decke bzw. des Bodens zwischen den Geschossen (1, 2) verlaufende Querglieder (26) überbrückt sind, die die Kabine (10) tragen.

11. Fahrzeug nach Anspruch 9 oder 10, dadurch gekennzeichnet, daß ein Teil (1'') der Kabine (10) in Querrichtung zwischen en Rändern (22, 24) des Containertransporterfahrgestells (20), ein weiterer Teil (1'') seitlich außerhalb desselben vorgesehen sind.

12. Fahrzeug nach einem der Ansprüche 3 bis 11, dadurch gekennzeichnet, daß es selbstfahrend ist.

13. Fahrzeug nach einem der Ansprüche 3 bis 11, dadurch gekennzeichnet, daß es von einem Hilfsfahrzeug schleppbar ist.

14. Fahrzeug nach einem de Ansprüche 3 bis 13, dadurch gekennzeichnet, daß die Kabine (110) des Fahrzeugs (200) auf einem selbsttragenden und selbstfahrenden, im wesentlichen horizontalen Rahmen (120) abgestützt ist, unter welchem in an sich bekannter Weise mehrere, in gegenseitiger Abhängigkeit gesteuert um 360 Grad drehbare Radsätze (122) angeordnet sind.

15. Fahrzeug nach Anspruch 14, dadurch gekennzeichnet, daß der Rahmen (120) zwei seitliche, in Längsrichtung verlaufende Rahmenholme (121) umfaßt und ein Untergeschoß (101) der Kabine (110) hängend zwischen den Rahmenholmen (121) angebracht ist, während das Obergeschoß (102) auf den Rahmenholmen (121) abgestützt ist.

16. Fahrzeug nach einem der Ansprüche 3 bis 13, dadurch gekennzeichnet, daß das Fahrzeug (400) eingeschossig ist und seitlich außerhalb der Spurbreite überstehende Bereiche (306, 307) aufweist.

17. Fahrzeug nach Anspruch 16, dadurch gekennzeichnet, daß der Kabinenboden (301) sich in derart geringer Höhe über dem Erdboden (302) befindet, daß er über höchstens drei Stufen (303) ersteigbar ist.

18. Fahrzeug nach einem der Ansprüche 3 bis 13, dadurch gekennzeichnet, daß in der Kabine (210) mindestens eine in mehreren Stufen ansteigende Sitzanordnung für die Fluggäste vorgesehen ist, die mehrere nach außen hin höhere, in Länsrichtung des Fahrzeugs (300) an dessen Seitenwand verlaufende Sitzreihen (209) umfaßt.

19. Flughafenanlage nach Anspruch 2, dadurch gekennzeichnet, daß das Fahrzeug schienengebunden und eine Gleisanlage für das Fahrzeug vorgesehen ist, die an der Ankunftszone sowie auf dem Vorfeld in unmittelbarer Nähe des Flugzeugs vorbeiführt.

20. Fahrzeug für eine Flughafenanlage nach Anspruch 19, dadurch gekennzeichnet, daß es Radsätze zum wahlweisen Befahren sowohl der Gleisanlage als auch einer gleislosen Fahrfläche umfaßt.

21. Verfharen nach Anspruch 1, dadurch gekennzeichnet, daß das Flugzeug auf dem Vorfeld von dem Fahrzeug bugsiert wird.

22. Fahrzeug zur Durchführung des Verfahrens nach Anspruch 21, dadurch gekennzeichnet, daß das Fahrzeug (100) eine Kuppelvorrichtung (524) aufweist, mittels derer es an das Flugzeug (530) ankuppelbar ist, um dieses zu bugsieren.

23. Fahrzeug nach Anspruch 22 mit einer in Längsrichtung sich erstreckenden Kuppelstange, dadurch gekennzeichnet, daß die Kuppelvorrichtung (524) durch eine Kuppelstange (525) gebildet ist, die in Längsrichtung (526) aus dem Fahrzeug (100) ausfahrbar bzw. unter dieses einfahrbar ist.

24. Fahrzeug nach einem der Ansprüche 3 bis 8, dadurch gekennzeichnet, daß es als Luftkissenfahrzeug ausgebildet ist, insbesondere für den Transport auf dem Wasser.

## Claims

1. Method of checking-in airport passengers between arrival at an arrival zone and boarding the aircraft, with checking-in of baggage and transfer from the arrival zone to the aircraft which is standing on the apron, in which, after arrival at the arrival zone the passengers and the luggage are conducted to a vehicle (100) which transports the passagers together with the luggage directly to the aircraft, characterised in that the chekingin and, if required, the security checking of the passengers takes place in the vehicle (100).

2. Airport installation for carrying out the method according to claim 1 comprising an arrival zone for the passengers and means for checking-in and if necessary for security cheks on the passengers and inclusing at least one vehicle (100) by means of which the passengers together with their luggage are transferred directly to the aircraft, characterised in that the chekingin arrangements and, if required, the security cheking arrangements, are provided in the vehicle (100).

3. Vehicle for an airport installation accoring to claim 2, characterised in that the interior (10) of the vehicle has a capacity for handling at least a substantial proportion of the number of passengers of an aircraft.

4. Vehicle according to claim 3 in which the interior (10) has two decks and the lower deck (1) has an entrance (4) accessible from the ground, whilst the exit (5) on the upper deck (2) is capable of being brought into direct engagement with the entrance door of the aircraft if necessary through an adjustable ramp (6), characterised in that the check-in desks (14) extend along the middle of the lower deck (1) and the baggage handling equipment (17) is in the form of a longitudinally extending conveyor arranged on the outer longitudinal side of the vehicle (100) on the opposite side of the check-in counters (14) from the entrance side (12).

5. Vehicle according to claim 3 or 4, characterised in that the check-in means data viewing equipment (15) for checking the booking and, if required, means for entering further bookings.

6. Vehicle according to claim 5, characterised in that the data viewing equipment (15) and, if required, the means for entering further bookings are connested to the central data processing equipment of the airport by radio.

7. Vehicle according to one of claims 3 to 6, characterised in that the check-in means (14, 15) are provided on the lower deck (1) and opposite the entrance (4) there is a staircase (8) or lift for transferring the passsengers from the lower part (1) to the upper deck (2).

8. Vehicle according to claim 7, characterised in that in the region of the transfer means there is arranged the section (9) for the security checking of passagers and luggage and that the single access to the upper deck (2) leads througt this section (9).

9. Vehicle according to one of claims 3 to 8, characterised in that it includes a cabin (10) carried on a container-handling chassis (20).

10. Vehicle according to claim 9, characterised in that the longitudinal supporting frame members (21, 25) of the container-handling chassis (20) are bridged by transverse bearers (26) extending between the decks (1, 2) at the level of the deck or floor and they the cabin (10).

11. Vehicle according to claim 9 or 10, characterised in that a part (1″) of the cabin (10) is provided in the transverse direction between the sides (22, 24) of the container-handling chassis (20) and a further part (1″) is laterally beyond those sides.

12. Vehicle according to one of claims 3 to 11, characterised in that it is self-powered.

13. Vehicle according to one of claims 3 to 11, characterised in that it is towed by a tractor vehicle.

14. Vehicle according to one of claims 3 to 13, characterised in that the cabin (110) of the vehicle (200) is supported on a self-supporting and self-driven substantially horizontal frame (120) below which are arranged, in a manner known in itself, sets of wheels (122) which are steered in mutual interdependence and can be turned through 360°.

15. Vehicle according to claim 14, characterised in that the frame (120) comprises two side frame members (121) extending longitudinally and a lower deck (101) of the cabin (110) is suspended between the frame members (121) whilst the upper deck (102) is supported on the frame members (121).

16. Vehicle according to one of claims 3 to 13, characterised in that the vehicle (400) is a single decker and has portions (306, 307) which extend laterally beyond the width of the track of the vehicle.

17. Vehicle according to claim 16, characterised in that the floor (301) of the cabin is at a minimum height above the ground (302) such as to allow boarding by a maximum of three steps (303).

18. Vehicle according to one of claims 3 to 13, characterised in that within the cabin (210) there is provided a seating arrangement for passengers which rises in a number of steps and which includes a number outwardly rising rows (209) of seats extending longitudinally along the side wall of the vehicle (300).

19. Airport installation according to claim 2, characterised in that the vehicle is rail-mounted and a track for the vehicle is provided, linking the arrival zone with the apron in the immediate neighbourhood of the aircraft.

20. Vehicle for airport installation according to claim 19, characterised in that it includes wheel sets for travelling at will both on the rails and also on a trackless driving surface.

21. Method according to claim 1, characterised in that the aircraft is manoeuvred onto the apron by the vehicle.

22. Vehicle for carrying out the method according to claim 21, characterised in that the vehicle (100) has a coupling device (524) by means of which it can be coupled to the aircraft (530) in order to manoeuvre it.

23. Vehicle according to claim 2 having a extending longitudinally coupling bar, characterised in that the coupling device (524) is formed by a coupling bar (525) which can be extended from and retracted into the vehicle (100) in a longitudinal direction (526).

24. Vehicle according to one of claims 3 to 8, characterised in that it is in the form of an air-cushion vehicle, in particular for travelling over water.

**Revendications**

1. Procédé pour l'accueil et le service de passagers d'avion entre leur arrivée dans la zone d'arrivée et leur entrée dans l'avion, avec remise des bagages et transport de la zone d'arrivée à l'avion attendant sur la piste de départ, procédé par lequel les passagers, après leur arrivée dans la zone d'acceuil sont dirigés avec les bagages dans un véhicule (100) qui les transporte, en commun avec les bagages directement vers l'avion, procédé caractérisé en ce que l'accueil ou le service et le cas échéant le contrôle de sécurité des passagers ont effectués dans le véhicule de transport (100).

2. Installation d'aéroport en application du procédé suivant la revendication 1 avec une zone d'arrivée pour les passagers, avec des installations pour l'accueil ou le service et le cas échéant des installations pour le contrôle de sécurité des passagers et avec au moins un véhicule (100) au moyen duquel des passagers avec leurs bagages sont transportés directement à l'avion, installation caractérisée en ce que les installations pour l'acceuil et le cas échéant le contrôle de sécurité des passagers s'effectuent dans le véhicule de transport lui-même (100).

3. Véhicule pour un aéroport suivant la revendication 2, caractérisé en ce que la cabine (10) du véhicule a une capacité suffisante pour recevoir au moins une partie importante des passagers d'un avion.

4. Véhicule suivant la revendication 3 dans lequel la cabine (10) est à deux étages et l'étage inférieur (1) présente une entrée (14) accessible à partir du sol tandis que la sortie (5) dans l'étage supérieur (2) peut être amenée, éventuellement par l'intermédiaire d'un escalier déplaçable, en liaison avec l'entrée de l'avion, véhicule caractérisé en ce que le guichet d'accueil (14) s'étend le long du milieu de l'étage inférieur (1), et le dépôt des bagages (17) est constitué par un dispositif de transport longitudinal disposé sur le côté longitudinal extérieur du véhicule (100) qui est en face du côté d'accès (12) des guichets d'accueil (14).

5. Véhicule suivant l'une des revendications 3 à 4, caractérisé en ce que l'installation d'accueil comprend un appareil caractérisé en ce que l'installation d'accueil des passagers comprend un appareil indicateur de données (15) par le contrôle de l'enregistrement et éventuellement également une installation pour la mise en mémoire d'autres opérations d'enregistrement.

6. Véhicule suivant la revendication 5, caractérisé en ce que l'appareil indicateur de données (15) et éventuellement l'installation de mise en mémoire d'autres opérations d'enregistrement sont reliées par radio à l'installation centrale de traitement de données de l'aéroport.

7. Véhicule suivant l'une quelconque des revendications 3 à 7, caractérisé en ce que l'installation (14, 15) d'accueil est prévue dans l'étage inférieur (1), et, en face de l'entrée (4) est prévu un escalier (8) ou un ascenseur pour le transfert des passagers de la partie inférieure (1) dans l'étage supérieur (2).

8. Véhicule suivant la revendication 7, caractérisé en ce que dans la zone de transfert est disposé le secteur (9) pour le contrôle de sécurité des passagers et des bagages à main qui constitue l'unique passage vers l'étage supérieur à travers ce secteur.

9. Véhicule suivant l'une quelconque des revendications 3 à 8, caractérisé en ce qu'il comprend une cabine (10) supportée par un bâti de transport de conteneurs (20).

10. Véhicule suivant la revendication 9, caractérisé en ce que les longerons de support (21, 25) du bâti de transport de conteneurs (20) sont chevauchés par des éléments transversaux (26) s'étendant au niveau du plafond et du plancher entre les étages, et qui supportent la cabine.

11. Véhicule suivant l'une des revendications 9 ou 10, caractérisé en ce qu'une partie (1') de la cabine (10) est prévue, en direction transversale entre les bords (22, 24) du bâti de transport de conteneurs (20), et une autre partie (1") est prévue latéralement à l'extérieur de la première.

12. Véhicule suivant l'une quelconque des revendications 3 à 11, caractérisé en ce qu'il est déplaçable par des propres moyens.

13. Véhicule suivant l'une quelconque des revendications 3 à 11, caractérisé en ce qu'il est déplaçable comme remorque d'un véhicule auxiliaire.

14. Véhicule suivant l'une quelconque des revendications 3 à 13, caractérisé en ce que la cabine (110) du véhicule (200) est supportée sur un châssis (120), essentiellement horizontal, autonome et déplaçable par lui-même au-dessous duquel sont disposés, d'une manière connue en soi plusieurs jeux de roues (122), commandées en dépendance réciproque et pouvant tourner sur 360 degrés.

15. Véhicule suivant la revendication 14, caractérisé en ce que le châssis (120) comprend deux longerons de châssis latéraux (121) s'étendant en direction longitudinale, et un étage inférieur (101) de la cabine (110) est suspendu entre ces longerons (121), tandis que l'étage supérieur (102) est appuyé sur ces longerons (121).

16. Véhicule suivant l'une quelconque des revendications 3 à 13, caractérisé en ce que le véhicule (400) est prévu à un seul étage, et présente des domaines (306, 307) dépassant latéralement vers l'extérieur sa largeur d'encombrement.

17. Véhicule suivant la revendication 16, caractérisé en ce que le plancher de cabine (301) se trouve à un niveau tel au dessus du sol (302) qu'il est accessible au maximum au moyens de trois marches (303).

18. Véhicule suivant l'une quelconque des revendications 3 à 13, caractérisé en ce que, dans la cabine (210) est prévu au moins, pour les passagers, un ensemble de sièges en gradins à différents niveaux, qui comprennent chacun plusieurs rangées de siège (209) s'étendant de plus en plus haut vers l'extérieur en direction longitudinale du véhicule (300) le long de la paroi latérale.

19. Installation d'aéroport suivant la revendication 2, caractérisé en ce que le véhicule est lié à des rails et il est prévu, pour le véhicule, une installation de voie ferrée qui passe devant la zone d'arrivée ainsi que sur l'aire d'évolution à proximité directe de l'avion.

20. Véhicule pour installation d'aéroport suivant la revendication 19, caractérisé en ce qu'il comprend les jeux de roues prévus pour une circulation au choix sur la voie ferrée ou également sur une surface de parcours sans rails.

21. Procédé suivant la revendication 1, caractérisé en ce que l'avion est disposé sur l'aire d'évolution de manière accessible, par son nez avant, par le véhicule.

22. Véhicule pour la mise en application du procédé suivant la revendication 21, caractérisé en ce qu'il présente un dispositif d'accouplement (524) au moyen duquel il peut être accouplé à l'avion (530) par son nez avant.

23. Véhicule suivant la revendication 22, avec une barre d'accouplement s'étendant en direction longitudinale, caractérisé en ce que le dispositif d'accouplement (524) est formé par une barre d'accouplement (525) qui peut être déployée en direction longitudinale hors du véhicule (100) et être également escamotée au-dessous de celui-ci.

24. Véhicule suivant l'une quelconque des revendications 3 à 8, caractérisé en ce qu'il est constitué comme un véhicule déplaçable sur coussins d'air, notamment pour son déplacement sur l'eau.

FIG.1

FIG.2

FIG.3

FIG.4

FIG.5

FIG.6

FIG.7

FIG.8

3

FIG.9

FIG.10a

FIG.10b

FIG.10c

## FIG.11

## FIG.12

## FIG.13

**0 050 643**

FIG.14

FIG.15

6

FIG.16

0 050 643